# EUROPÄISCHE PATENTSCHRIFT

(11) **EP 3 101 188 B1**
(45) Veröffentlichungstag und Bekanntmachung des Hinweises auf die Patenterteilung: **20.11.2019**
(21) Anmeldenummer: 16172024.8
(22) Anmeldetag: 30.05.2016
(51) Int. Cl.: E04B 1/76

(54) **DÄMMSTOFFHALTER ZUR BEFESTIGUNG VON DÄMMSTOFFPLATTEN AN EINEN UNTERGRUND**
INSULATION MOUNT FOR FASTENING INSULATION PANELS TO A SUBSTRATE
SUPPORT D'ISOLANT POUR LA FIXATION DE PLAQUES D'ISOLANT SUR UN SOUS-SOL

(30) Priorität: 02.06.2015 DE 102015006822
(43) Veröffentlichungstag der Anmeldung: 07.12.2016
(73) Patentinhaber: RANIT-Befestigungssysteme GmbH, 45701 Herten (DE)
(72) Erfinder: Gräwe, Bernd, 45701 Herten (DE)
(74) Vertreter: Grosse, Wolf-Dietrich Rüdiger

(56) Entgegenhaltungen:
- EP-A2- 2 666 919
- DE-A1- 4 319 455

## Beschreibung

Die Erfindung betrifft einen Dämmstoffhalter, der zur Befestigung von Dämmstoffplatten oder dergleichen Isoliermittel an einen Untergrund einen zentralen, zur Durchführung einer Schraube mit einer gestuften Längsbohrung versehenen Hohlschaft aufweist, wobei das in Montagerichtung hintere Schaftende zum drehfesten Ansetzen eines Montagewerkzeugs mit einem Drehmitnahme-Innenmehrkant ausgebildet ist und der Hohlschaft mit mindestens einer schraubenflächenartig umlaufenden Schneidwendel versehen ist, und wobei nach dem Durchbohren der Dämmstoffplatte bis einschließlich in den Untergrund der mit der Schraube vormontierte Dämmstoffhalter zum rotierenden Eintreiben in das vorgebohrte Loch mit seinem in Montagerichtung vorderen Ende an die Loch-Eintrittsöffnung der Dämmstoffplatte angesetzt wird.

Durch die EP 0 811 773 B1 ist ein Befestigungssystem bekannt geworden, dass einen Dämmstoffhalter mit einerseits in Achsrichtung des Schaftes zwei voneinander beabstandeten wendet- bzw. schraubenflächenartigen Dämmstoffgewinden, ausgebildet um einen zylindrischen Kern einer axialen Durchgangs- bzw. Längsbohrung, und andererseits ein damit dreh- und axialfest verbundenes, in den Untergrund verankerbares Schraubgewinde aufweist. Unter einer Wendelfläche ist dabei eine Fläche zu verstehen, die von einer gedachten Geraden überstrichen wird, wenn sich die Gerade längs einer gedachten Achse entlang schraubt, von der die Gerade seitlich absteht.

Nach dem Durchbohren der Dämmstoffplatte bis einschließlich in den Untergrund, z.B. Mauerwerk, Holz, Gipskarton oder dergleichen, wird der Dämmstoffhalter eingesetzt und schneidet sich bei Drehbeaufschlagung in das Isolier- bzw. Dämmstoffmaterial ein. Der Gewindekern des Dämmstoffhalters ragt aus einer dem Untergrund zugewandten Seite aus der Dämmstoffplatte vor, wobei der vorkragende Überstand durch Drehen des Dämmstoffhalters einstellbar ist. Nach dem Einschneiden des Dämmstoffhalters in die Dämmstoffplatte wird durch die Längsbohrung eine Schraube hindurchgesteckt und in einen in das Bohrloch des Untergrundes eingesetzten Dübel eingeschraubt und dadurch verankert oder wie im Falle eines Holzschraubengewindes direkt im Untergrund bzw. -bau festgesetzt. Als Befestigungsmittel kann anstelle einer Schraube ein einzuschlagender Nagel zum Einsatz kommen.

Zur Befestigung von Dämmstoffplatten, z.B. hergestellt aus Polystyrol, an einem tragenden Mauerwerk, wie eine aus Kalksandstein oder Betonmaterial errichtete Gebäudewand, ist aus der EP 1 783 300 A2 ein Spiralhalteteller bekannt, der über seine gesamte Länge mit einer im Verhältnis zu seinem Hohlschaft einen großen Außendurchmesser aufweisenden und damit großflächigen, mehrgängigen Schneidwendel versehen ist.

Durch die DE 10 2004 064 114 B4 ist ein Befestigungselement für Dämmstoffplatten bekannt geworden, das aus einer Holzschraube mit einem daran von vornherein dreh- und axialfest mit Kunststoff umspritzten Schneidwendel-Dämmstoffhalter besteht. Das Schneidwendelgewinde und das Holzschraubengewinde weisen eine gleiche Gewindesteigung auf, wobei das Schneidwendelgewinde in mehrere Abschnitte unterteilt sein kann, die sich über jeweils etwa 360° in Umfangsrichtung oder weniger erstrecken. Die Abschnitte des Gewindegangs sind axial voneinander beabstandet. Die Abstände betragen ein ganzzahliges Vielfaches der Gewindesteigung.

Weitere mit Schneidwendeln ausgebildete Dämmstoffhalter zum Befestigen von Wärmedämmplatten sind aus der DE 10 2011 054 895 A1, EP 2 666 919 A2 und EP 1 400 704 A1 bekannt.

Allen diesen Dämmstoffhaltern ist gemeinsam, dass sie sich beim Einschrauben zwar mit ausreichender Tragfähigkeit in die Dämmstoffplatte einschneiden, dies jedoch nicht mit einer sauberen Schnittkontur, denn das Dämmstoffmaterial reißt am Außenumfang bzw. den Rändern der Schneidwendeln ein, so dass kraterförmige Vertiefungen und Unebenheiten in der Dämmstoffplatte entstehen. Zudem läßt sich trotz des zylindrischen Hohlschafts, d. h. des zentralen Grundkörpers, der mit seinem Außendurchmesser die Seele des Dämmstoffhalters definiert, insbesondere nicht erreichen, ein kreisrundes Loch in das Dämmstoffmaterial einzuschneiden. Ein passgenaues Verschließen des oberen Lochendes durch einen Stopfen ist somit nicht möglich, was bei der Montage Zusatzarbeiten erforderlich macht.

Der Erfindung liegt daher die Aufgabe zugrunde, einen gattungsgemäßen Dämmstoffhalter ohne die genannten Nachteile zu schaffen, der sich unter weitestgehender Vermeidung von Beschädigungen der Dämmstoffplatte mit sauberem Schnitt und exakter Lochausbildung im Bereich auch der Seele des Dämmstoffhalters in das Dämmstoffmaterial einschneidet.

Diese Aufgabe wird erfindungsgemäß durch die im kennzeichnenden Teil des unabhängigen Anspruchs angegebenen Merkmale gelöst.

Hierbei bewirkt das am Dämmstoffhalter zusätzlich ausgebildete, sich bei der Montage noch vor dem in Montagerichtung vordersten Ende des Grundkörpers bzw. Hohlschafts des Dämmstoffhalters auf die Dämmstoffplatte aufsetzende Zentrier- und Führungsmittel aufgrund seiner Dimensionierung, dass schon beim Ansetzen des mit der Schraube vormontierten Dämmstoffhalters an die Dämmstoffplatte die Eintrittsöffnung des vorgebohrten Lochs konzentrisch von dem Schneidring und/oder der Hülse umschlossen wird. Anschließend wird das vorgebohrte Loch mit dem Vorschub des Dämmstoffhalters stets am Ort des Geschehens, d. h. dort, wo sich das Zentrier- und Führungsmittel gerade befindet, entsprechend der Länge des Zentrier- und Führungsmittels von diesem eingekammert.

Der Dämmstoffhalter schneidet sich daher von Beginn an geführt und kreisrund in den Dämmstoff ein und die Schraube wird zentriert, in Linie mit dem vorgebohrten Loch verlaufend durch den Dämmstoff mit genauer Ausrichtung auf das sich im Mauerwerk fortsetzende, vorgebohrte Loch eingebracht. Die mit etwas Radialspiel in den Hohlschaft des Dämmstoffhalters eingesetzte Schraube kann keine von der durch das vorgebohrte Loch vorgegebenen Zielrichtung ausweichenden Bewegungen ausführen. Das Ausfasern bzw. Einreißen des Dämmstoffmaterials wird verhindert und die Schraube taucht beim Übergang in das Mauerwerk zielgerichtet in das vorgebohrte Loch ein.

Eine bevorzugte Ausführung der Erfindung sieht vor, dass das Führungs- und Zentriermittel als ein dünnwandiger Schneidring ausgebildet ist, der einen mit dem größten Außendurchmesser (der Seele) des Hohlschafts des Dämmstoffhalters übereinstimmenden Außendurchmesser besitzt. Es wird hierdurch die kreisrunde Lochausbildung an den außen zylindrischen Grundkörper des Hohlschaftes angepasst, sobald sich der voreilende Schneidring in den Dämmstoff einschneidet. Nach vorteilhaften Ausgestaltungen der Erfindung kann der Schneidring mit einer einheitlichen umlaufenden oder umlaufend mit einer sägezahnförmigen Schneidkante ausgebildet werden.

Ein vorteilhafter Vorschlag der Erfindung sieht vor, dass der Schneidring einstückig mit dem Hohlschaft ausgebildet ist, z. B. durch Spritzgießen des Dämmstoffhalters aus einem geeigneten, handelsüblichen Kunststoff.

Wenn der Schneidring erfindungsgemäß an seinem in Montagerichtung hinteren Ende einen Innenkonusabschnitt aufweist, der auf einem am vorderen Ende des Hohlschafts ausgebildeten Aussenkonusabschnitt mit Selbsthemmung befestigt werden kann, läßt sich der Dämmstoffhalter mit einem Schneidring nachrüsten, der dann aus einem metallischen Material hergestellt sein könnte.

Nach einer weiteren vorteilhaften Ausgestaltung können der voreilende Schneidring und der Innenkonusabschnitt axial voneinander beabstandet und durch Längsstreben zu einer Einheit miteinander verbunden sein. Beim Montieren schiebt sich die Einheit entgegen der Montagerichtung nach hinten, bis der Innenkonusabschnitt den Außenkonusabschnitt des Hohlschaftes umschließt. Hierbei läßt sich eine Knautschzone dadurch erreichen, dass die Längsstreben aus einem Material sind, das sich unter der Vorschubkraft verbiegen bzw. -formen kann.

Nach einer anderen Ausführung der Erfindung ist das Führungs- und Zentriermittel als längliche Hülse, insbesondere Kunststoffhülse, ausgebildet. Sie besitzt einen Innendurchmesser, der in etwa dem kleinsten Durchmesser des Aussenkonusabschnitts des Hohlschaftes bzw. Grundkörpers des Dämmstoffhalters angepasst ist und größer als ein sich dem Konusabschnitt ggf. anschließendes, den Grundkörper verlängerndes zylindrisches Endstück ist, demgegenüber die längliche Hülse in der Einbaulage vorspringt, d. h. erfindungsgemäß voreilend angeordnet ist, und die Gesamtlänge des Dämmstoffhalters entsprechend ihrer gewählten Abmessung vergrößert. Die somit insgesamt größere Länge unterstützt die Führung der Schraube durch die Dämmstoffplatte und begünstigt, dass die Schraube danach zielorientiert in das sich im Untergrund fortsetzende, vorgebohrte Loch einschrauben kann.

Wenn die längliche Hülse und der sehr viel kürzere Schneidring vorzugsweise gemeinsam zum Einsatz kommen, sieht die Erfindung vor, dass die längliche Hülse konzentrisch im Schneidring und aus diesem vorkragend angeordnet ist. Sollte der durch die Schneidkante der länglichen Hülse erzeugte Locheinschnitt konzentrisch zum vorgebohrten Loch eventuell nicht völlig kreisrund sein, so wird spätestens der nachfolgende Schneidring dies sicherstellen.

Bei diesem kombinierten Einsatz kann nach einer erfindungsgemäßen Ausgestaltung die längliche Hülse mit einer Knautschzone ausgebildet werden, z. B. durch ein sich in axialer Richtung erstreckendes und die Hülse querendes Langloch.

Eine Ausgestaltung der Erfindung, vorzugsweise in Kombination mit einem Schneidring, sieht vor, dass die längliche Hülse an ihrem vorderen Ende in einen Hohlzapfen übergeht, dessen Außendurchmesser kleiner als der Durchmesser des vorgebohrten Lochs ist. Hierdurch läßt sich beim Ansetzen des montagefertigen Dämmstoffhalters durch den in das vorgebohrte Loch eintauchenden Hohlzapfen eine Vorzentrierung erreichen, die auch den zielgenauen Eintritt in das sich im tragenden Untergrund fortsetzende vorgebohrte Loch begünstigt. Sobald der Hohlzapfen völlig in das vorgebohrte Loch eingetaucht ist, setzt sich der größere Schaftbereich der länglichen Hülse, d. h. mit ihrem im Übergang zum Hohlzapfen größeren Durchmesser das vorgebohrte Loch konzentrisch umschließend, auf zunächst den Dämmstoff und später den tragenden Untergrund auf. Beim Befestigungsvorgang zerschneidet die Schraube den Hohlzapfen, der wegen seines geringen Durchmessers keinen Spreizdruck aufbauen kann.

Weitere Merkmale und Einzelheiten der Erfindung ergeben sich aus den Patentansprüchen und der nachfolgenden Beschreibung von in den Zeichnungen dargestellten Ausführungsbeispielen der Erfindung. Es zeigen:
- Fig. 1: als Einzelheit in einer Gesamtansicht einen Dämmstoffhalter mit einer Schneidwendel und einem an seinem Hohlschaft bzw. Grundkörper einstückig angeformten, erfindungsgemäßen Schneidring als Führungs- und Zentriermittel;
- Fig. 2a, 2a: eine Gesamtansicht (Fig. 2a) wie zuvor in Fig. 1, demgegenüber eines zwei axial voneinander beabstandete Schneidwendeln, an seinem vorderen Hohlschaftende einen Aussenkonusabschnitt, der in ein zylindrisches Endstück übergeht, an das der Schneidring einstückig angeformt ist, aufweisenden Dämmstoffhalters, und einen Längsschnitt (Fig. 2b) des Dämmstoffhalters;
- Fig. 3a, 3b: eine Gesamtansicht (Fig. 3a) und einen Längsschnitt (Fig. 3b) eines wie in den Fig. 2a, 2b ausgebildeten Dämmstoffhalters, wobei hier der Schneidring über einen Innenkonusabschnitt mit Selbsthemmung auf den Aussenkonusabschnitt aufgesteckt ist;
- Fig. 4: als Einzelheit im Längsschnitt den aufsteckbaren Schneidring des Dämmstoffhalters nach den Fig. 3a, 3b;
- Fig. 5: einen Schneidring wie zuvor in Fig. 4, demgegenüber ohne Innenkonus und mit einer Variante seiner Schneidkantenausbildung dargestellt;
- Fig. 6: als explosive Darstellung im Längsschnitt einen Dämmstoffhalter wie in den Fig. 4a, 4b, davon dadurch abweichend, dass der Schneidring mit einer vorkragend angeordneten länglichen Hülse als weiteres Führungs- und Zentriermittel ausgebildet ist und über einen Innenkonusabschnitt mit dem Aussenkonusabschnitt des Hohlschafts verbunden werden kann;
- Fig. 7: den Dämmstoffhalter der Fig. 6, in Vorbereitung zur Montage mit eingesetzter Schraube;
- Fig. 8: in einer Längsansicht als Einzelheit ein aus der Kombination einer länglichen Hülse mit einem Schneidring bestehendes, mittels Innenkonusabschnitt auf einen Aussenkonusabschnitt des Hohlschafts aufsteckbares Zentrier- und Führungsmittel, wobei der Innenkonusabschnitt und der Schneidring durch Längsstreben axial voneinander beabstandet zu einer in sich starren Einheit miteinander verbunden sind;
- Fig. 9: in einem Längsschnitt einen mit eingesetzter Schraube zur Montage vorbereiteten Dämmstoffhalter wie gemäß Fig. 7, dem hier jedoch eine als Gesamtansicht dargestellte Zentrier- und Führungsmittel-Kombination zugeordnet ist, bei der der Innenkonusabschnitt über verformbare Längsstreben mit einem Schneidring verbunden ist, der mit einer vorkragend angeordneten länglichen Hülse ausgebildet ist;
- Fig. 10: in einer Gesamt- bzw. Längsansicht als Einzelheit eine Variante eines aus einem Schneidring und einer länglichen Hülse bestehenden, kombinierten Führungs- und Zentriermittels, wobei die Hülse mit einer Knautschzone ausgebildet ist;
- Fig. 11: am Beispiel des in den Fig. 3a, 3b gezeigten Dämmstoffhalters die Befestigung einer Dämmstoffplatte an einen tragenden Untergrund, bei Montagebeginn vor dem Einschneiden mit dem an die Dämmstoffplatte angesetzten Schneidring dargestellt;
- Fig. 12: den Endmontagezustand des Dämmstoffhalters der Fig. 11.
- Fig. 13: in einem Längsabschnitt einen mit eingesetzter Schraube zur Montage vorbereiteten Dämmstoffhalter, der eine Variante eines aus der Kombination einer länglichen Hülse mit einem Schneidring bestehenden Zentrier- und Führungsmittels aufweist, indem die längliche Hülse an ihrem in Montagerichtung gesehen vorderen Ende mit einem Hohlzapfen ausgebildet ist; und
- Fig. 14: den Dämmstoffhalter der Fig. 13 im Endmontagezustand mit Befestigung einer Dämmstoffplatte an einen tragenden Untergrund.

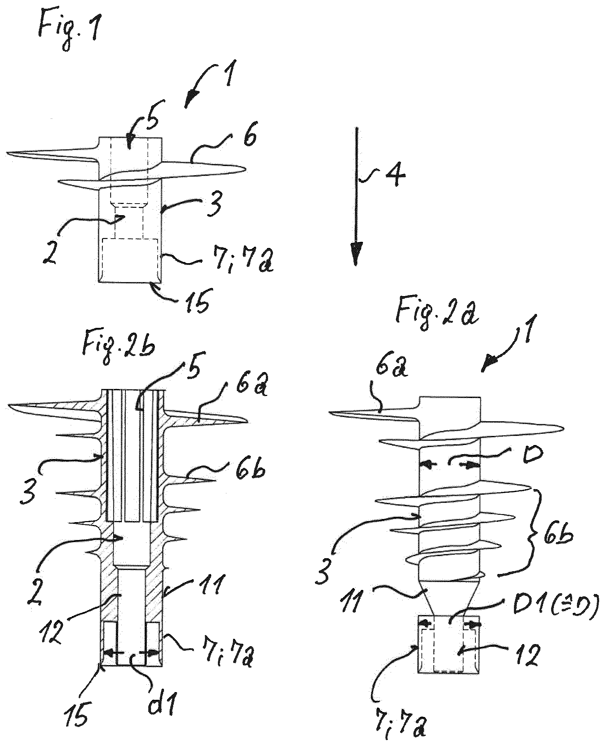

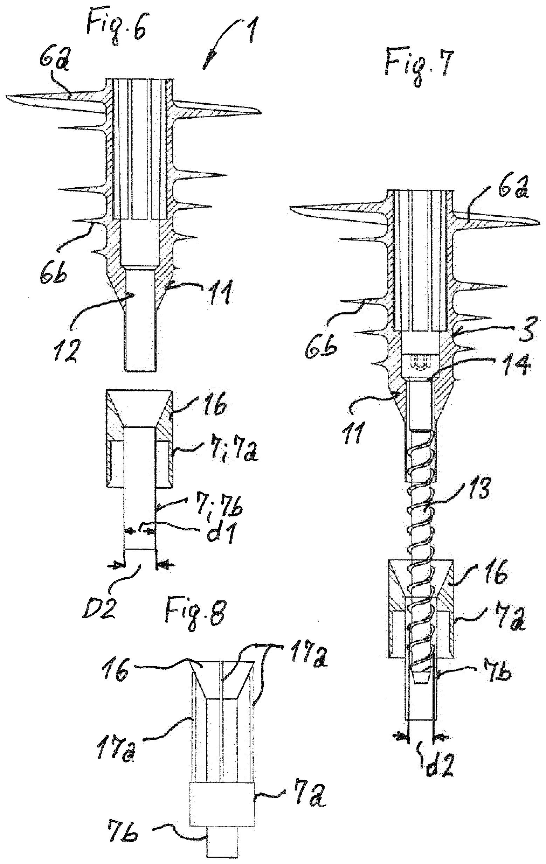

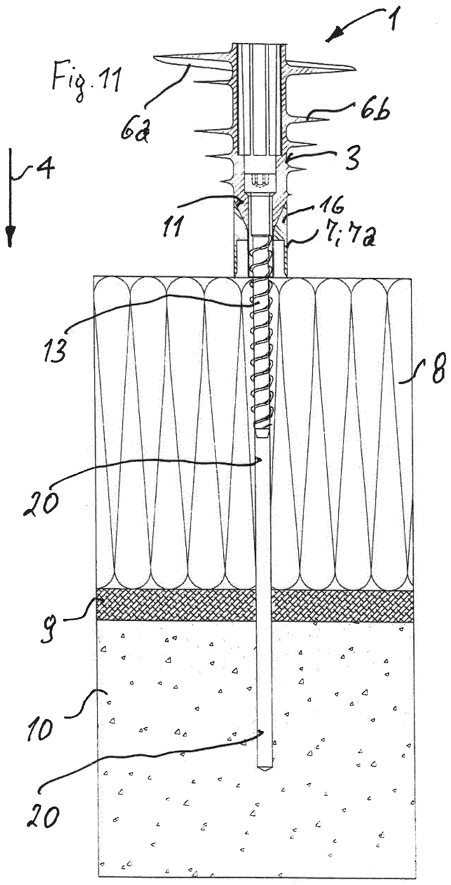

Allen der in den Figuren gezeigten, durch Spritzgießen aus Kunststoff hergestellten Dämmstoffhalter 1 ist gemeinsam, dass sie einen Grundkörper, der mit einer durchgehenden, gestuften Längsbohrung 2 als Hohlschaft 3 ausgebildet ist, wobei das in Montagerichtung 4 hintere Ende der Längsbohrung 2 zum drehfesten Ansetzen eines nicht dargestellten Montagewerkzeugs mit einem Drehmitnahme - Innenmehrkant 5 (vgl. z. B. die Fig. 2b und 11) ausgebildet ist, am Hohlschaft 3 eine schraubenflächenartig umlaufende Schneidwendel 6 (vgl. Fig. 1) oder zwei axial voneinander beabstandet vorgesehene, schraubenflächenartig umlaufende Schneidwendel 6a, 6b (vgl. z. B. die Fig. 2a und 7) und wenigstens ein gegenüber dem Hohlschaft 3 bzw. dem Grundkörper in Montagerichtung 4 voreilend vorgesehenes Führungs- und Zentriermittel 7 bzw. 7a, 7b aufweisen.

Das Führungs- und Zentriermittel 7; 7a, 7b kommt bei der Befestigung einer Dammstoffplatte 8, in der Regel unter Zwischenschaltung einer Kleberschicht 9, an einen tragenden Untergrund 10, insbesondere Mauerwerk, auch dann stets gegenüber dem Hohlschaft 3 voreilend, d. h. früher als der Hohlschaft zur Anlage an die Dämmstoffplatte 8 (vgl. Fig. 11), wenn das in Montagerichtung 4 vordere Ende des Hohlschafts 3 als Konus bzw. Aussenkonusabschnitt 11 des Grundkörpers ausgebildet ist, dem sich außerdem noch ein zylindrisches Endstück 12 anschließen kann, wie abgesehen von Fig. 1 in den übrigen Figuren dargestellt.

Bei den Dämmstoffhaltern 1 der Fig. 1 sowie 2a, 2b ist ein ringartiger Schneidring 7a als Führungs- und Zentriermittel 7 einstückig mit dem Hohlschaft 3 ausgebildet, wobei der Schneidring 7a in der Ausführung des Dämmstoffhalters 1 nach den Fig. 2a, 2b an das dort im Anschluss an den Aussenkonusabschnitt 11 das vordere Ende des Haftschafts 3 bildende zylindrische Endstück 12 angeformt ist. Unterhalb des Drehmitnahme-Innenmehrkants 5 ist in der gestuften Längsbohrung 2 zur drehfesten Aufnahme des Kopfes einer Schraube 13 (vgl. z. B. Fig. 7) eine Anschlagaufnahme 14 vorgesehen, die sich bei den Dämmstoffhaltern 1 mit Aussenkonusabschnitt 11 im Übergangsbereich zum Konus befindet.

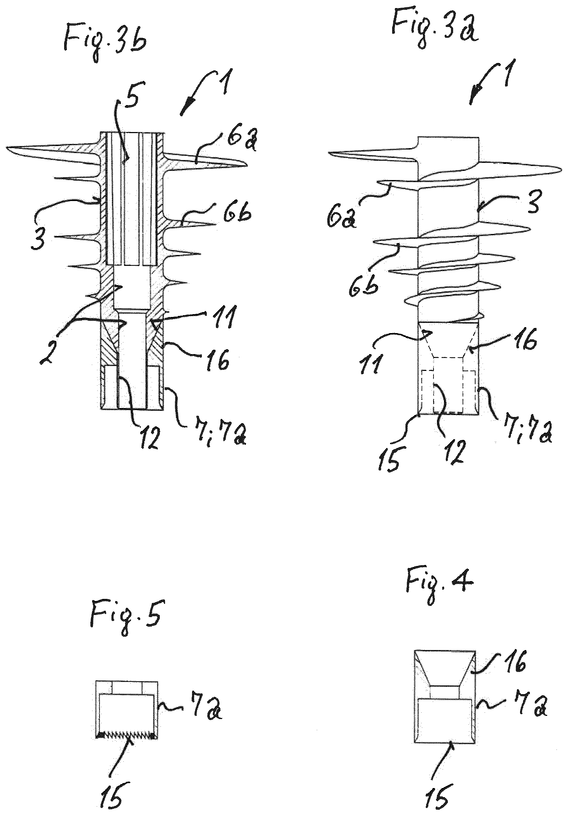

Die Fig. 3a, 3b sowie 6, 7 und 9 zeigen verschiedene Varianten des Führungs- und Zentriermittels 7; 7a, 7b zur Steckverbindung mit Selbsthemmung auf den Aussenkonusabschnitt 11 des Hohlschafts 3. Der Schneidring 7a weist dazu unmittelbar an seinem von seiner Schneidkante 15 entfernten, hinteren Ende oder mit räumlichen Abstand dazu einen entsprechenden Innenkonusabschnitt 16 auf. Die Schneidkante 15 kann einheitlich umlaufend (Fig. 4) oder umlaufend sägezahnförmig (Fig. 5) vorgesehen werden.

Anstelle eines Schneidrings 7a, kann zum voreilenden Einschneiden eine längliche Hülse 7b als Führungs- und Zentriermittel 7 des Dämmstoffhalters 1 verwendet werden, z. B. ebenfalls einstückig mit dem Hohlschaft 3 ausgebildet oder als Steckverbindung ausgeführt. Die Fig. 6 bis 9 zeigen Ausführungen, bei denen der Schneidring 7a und die längliche Führungshülse 7b als gemeinsames, miteinander kombiniertes Führungs- und Zentriermittel 7 zum Einsatz kommen.

Die längliche Hülse 7b ist hierbei konzentrisch im Schneidring 7a und aus diesem vorkragend angeordnet. Diese Einheit wird zur Montage auf die in den Hohlschaft 3 eingesetzte Schraube 13 aufgesteckt (vgl. Fig. 7) und schiebt sich beim Eindrehen des Dämmstoffhalters 1 entgegen der Montagerichtung 4 auf der Schraube 13 nach oben bzw. hinten, bis sich der Innenkonusabschnitt 16 des Schneidrings 7a auf dem Aussenkonusabschnitt 11 des Hohlschafts 3 festgesetzt hat.

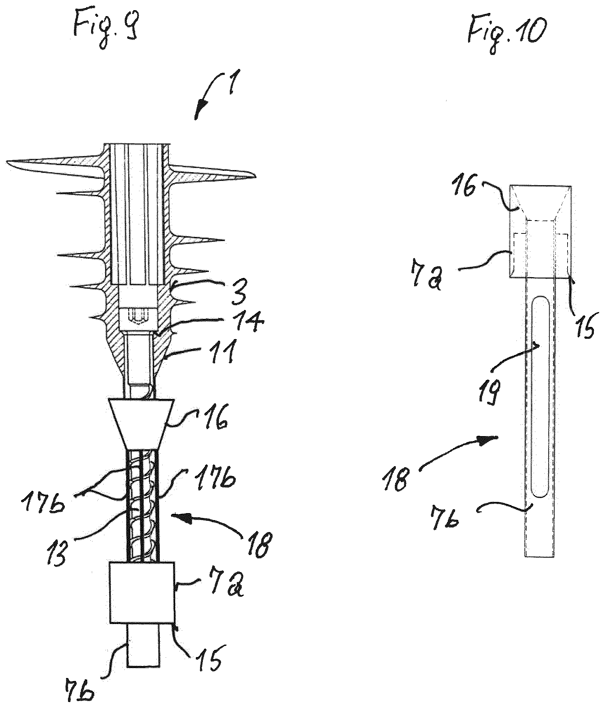

Die aus dem Schneidring 7a und der länglichen Hülse 7b kombinierte Einheit läßt sich, wie in den Fig. 8 und 9 dargestellt, axial vom Innenkonusabschnitt 16 beabstandet ausgebilden und durch Längsstreben 17a bzw. 17b mit dem Innenkonusabschnitt 16 verbinden. Die sich vom äußeren Rand des Schneidrings 7a bis zum größten Außenumfang des Innenkonusabschnitts 16 erstreckenden Längsstreben 17a nach Fig. 8 bewirken eine Versteifung zu einer starren Einheit. Hingegen sind die Längsstreben 17b nach Fig. 9 verformbar und bieten bei der Montage des Dämmstoffhalters 1 eine Knautschzone 18. Bei der Ausführung nach Fig. 10 wird eine solche Knautschzone 18 durch ein sich in axialer Richtung erstreckendes und die in dem Schneidring 7a angeordnete längliche Hülse 7b querendes Langloch 19 erreicht.

Ganz gleich, ob als Führungs- und Zentriermittel 7 ein Schneidring 7a oder eine längliche Hülse 7b oder eine Einheit aus Schneidring 7a und längliche Hülse 7b zum Einsatz kommt, besitzt das gegenüber dem Hohlschaft 3 des Dämmstoffhalters 1 jeweils voreilende Zentriermittel 7a oder 7b oder 7a, 7b einen größeren Außendurchmesser D 1 bzw. D 2 (vgl. die Fig. 2a und 6) als ein zur Montage durch die Dämmstoffplatte 8 bis in den Untergrund 9 vorgebohrtes Loch 20 und einen Innendurchmesser d1, der zumindest dem Gewindeinnendurchmesser d2 der Schraube 13 entspricht (vgl. die Fig. 2b und 7). Der größte Außendurchmesser D 1 des Schneidrings 7a stimmt hierbei mit dem Außendurchmesser D des Hohlschafts 3 überein.

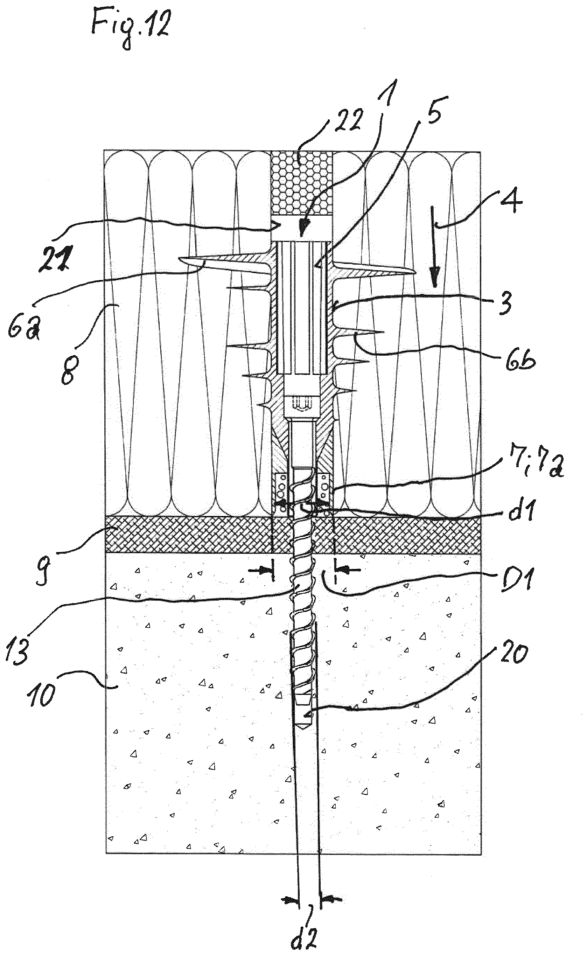

Die Fig. 11 und 12 zeigen unter Verwendung des in den Fig. 3a, 3b dargestellten Dämmstoffhalters 1 eine Befestigungsmontage. Die unter Zwischenschaltung einer Kleberschicht 9 am tragenden Untergrund 10 festgelegte Dämmstoffplatte 8 (Material Polystyrol) ist mit einem bis in den Untergrund 10 reichenden Loch 20 vorgebohrt und der Dämmstoffhalter 1 mit seinem Schneidring 7a das vorgebohrte Loch 20 mit radialem Abstand an der Oberfläche der Dämmstoffplatte 8 konzentrisch umschließend angesetzt worden. Die in den Hohlschaft 3 eingesetzte Schraube 13 taucht mit ihrem Gewinde in das vorgebohrte Loch 20 der Dämmstoffplatte 8 (Fig. 11). Durch die von einem Montagewerkzeug über den Drehmitnahme-Innenmehrkant 5 eingeleitete Drehbewegung schneidet sich der Dämmstoffhalter 1 mit seinen Schneidwendeln 6a, 6b bis zu der in Fig. 12 dargestellten Endlage in die Dämmstoffplatte 8 ein. Der mit seiner Schneidkante 15 gegenüber dem Hohlschaft 3 voreilend in den Dämmstoff eindrigende Schneidring 7a sorgt dafür, dass einerseits ein kreisrundes Loch 21 vorliegt, das sich oberhalb des versenkten Dämmstoffhalters 1 mit einem Stopfen 22 verschließen lässt. Andererseits wird die Schraube 13 ausgerichtet auf das sich im Untergrund 10 fortsetzende vorgebohrte Loch 20 geführt.

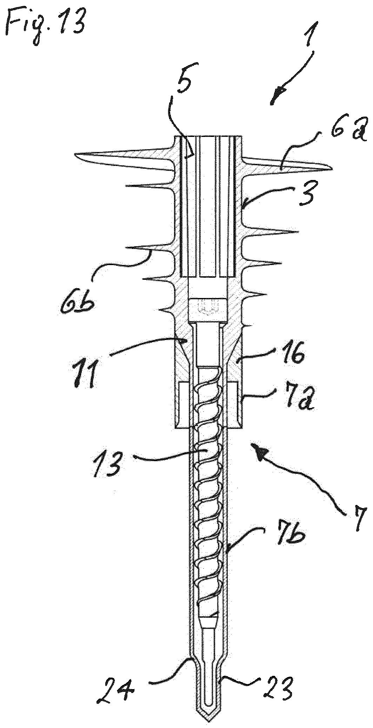

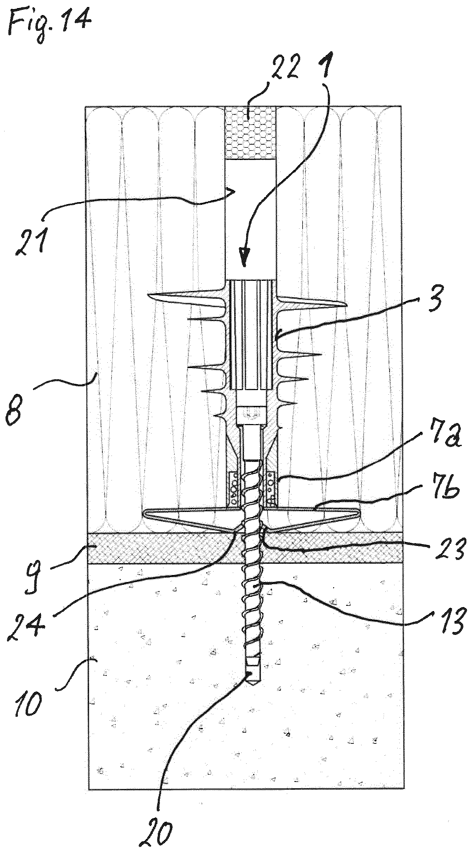

Der in Fig. 13 dargestellte Dämmstoffhalter 1 weist ebenfalls ein aus der Kombination eines Schneidrings 7a mit einer länglichen Hülse 7b bestehendes, durch Konusverbindung auf dem Grundkörper 3 befestigtes Führungs- und Zentriermittel 7 auf. Die längliche Hülse 7 b ist hier - abweichend von den vorbeschriebenen Ausführungen - an ihrem vorderen Ende mit einem der Vorzentrierung beim Einführen in das vorgebohrte Loch 20 dienenden Hohlzapfen 23 ausgebildet. Dieser wird beim rotierenden Eintreiben des Dämmstoffhalters 1 von der Schraube 13 zerschnitten. Der Endmontagezustand dieses Dämmstoffhalters ist in Fig. 14 gezeigt. Wie daraus zu erkennen ist, hat sich die gegenüber dem Hohlzapfen 23 im Durchmesser größere Endkante 24 des Schaftes der länglichen Hülse 7b beim Übergang in den tragenden Untergrund 10 bzw. in die vorgeschaltete Kleberschicht 9 konzentrisch um das sich dort fortsetzende vorgebohrte Loch 20 gesetzt und eine Ausknickung der länglichen Hülse 7b bewirkt.

Statt zu einer Ausknickung, kann es auch zum Zusammenknautschen kommen. Der Stopfen 22 verschließt wiederum das im Dämmstoff erzeugte kreisrunde Loch 21.

### Bezugszeichenliste

- 1: Dämmstoffhalter
- 2: Längsbohrung
- 3: Hohlschaft (Grundkörper)
- 4: Montagerichtung
- 5: Drehmitnahme-Innenmehrkant
- 6; 6a, 6b: Schneidwendel
- 7; 7a, 7b: Führungs- und Zentriermittel (Schneidring 7a, längliche Hülse 7b)
- 8: Dämmstoffplatte
- 9: Kleberschicht
- 10: tragender Untergrund
- 11: Konus / Aussenkonusabschnitt
- 12: zylindrisches Endstück
- 13: Schraube
- 14: Anschlagaufnahme
- 15: Schneidkante
- 16: Innenkonusabschnitt
- 17a, b: Längsstreben
- 18: Knautschzone
- 19: Langloch
- 20: vorgebohrtes Loch
- 21: kreisrundes Loch
- 22: Stopfen
- 23: Hohlzapfen
- 24: Endkante

- d2: Gewindenenndurchmesser der Schraube
- D: Außendurchmesser des Hohlschafts
- D1: Außendurchmesser des Schneidrings
- D2: Außendurchmesser der länglichen Hülse
- d1: Innendurchmesser des Schneidrings bzw. der länglichen Hülse

## Patentansprüche

1. Dämmstoffhalter (1), der zur Befestigung von Dämmstoffplatten (8) oder dergleichen Isoliermittel an einen Untergrund (10) einen zentralen, zur Durchführung einer Schraube (13) mit einer gestuften Längsbohrung (2) versehenen Hohlschaft (3) aufweist, wobei das in Montagerichtung (4) hintere Schaftende zum drehfesten Ansetzen eines Montagewerkzeugs mit einem Drehmitnahme-Innenmehrkant (5) ausgebildet ist und der Hohlschaft (3) mit mindestens einer schraubenflächenartig umlaufenden Schneidwendel (6; 6a, 6b) versehen ist, und wobei nach dem Durchbohren der Dämmstoffplatte (8) bis einschließlich in den Untergrund (10) der mit der Schraube (13) vormontierte Dämmstoffhalter (1) zum rotierenden Eintreiben in das vorgebohrte Loch (20) mit seinem in Montagerichtung (4) vorderen Ende an die Loch-Eintrittsöffnung der Dämmstoffplatte (8) angesetzt wird,
**dadurch gekennzeichnet,**
**dass** er mit wenigstens einem in Montagerichtung (4) gegenüber dem Hohlschaft (3) voreilenden, ringartigen, sich in den Dämmstoff einschneidenden, einen größeren Außendurchmesser (D1, D2) als das vorgebohrte Loch (20) und einen zumindest dem Gewindenenndurchmesser (d2) der Schraube (13) entsprechenden Innendurchmesser (d1) aufweisenden Führungs- und Zentriermittel (7; 7a, 7b) ausgebildet ist, wobei sich der zur Montage mit der Schraube (13) vormontierte Dämmstoffhalter (1) mit dem Führungs- und Zentriermittel (7; 7a, 7b) schon beim Ansetzen des Dämmstoffhalters (1) auf die Dämmstoffplatte (8) aufsetzt und die Eintrittsöffnung des vorgebohrten Lochs (20) konzentrisch umschließt.

2. Dämmstoffhalter nach Anspruch 1,
**dadurch gekennzeichnet,**
**dass** das Führungs- und Zentriermittel (7) als ein dünnwandiger Schneidring (7a) ausgebildet ist, der einen mit dem größten Außendurchmesser (D) des Hohlschafts (3) übereinstimmenden Außendurchmesser (D1) besitzt.

3. Dämmstoffhalter nach Anspruch 2,
**dadurch gekennzeichnet,**
**dass** der Schneidring (7a) einstückig mit dem Hohlschaft (3) ausgebildet ist.

4. Dämmstoffhalter nach Anspruch 2,
**dadurch gekennzeichnet,**
**dass** der Schneidring (7a) an seinem in Montagerichtung (4) hinteren Ende einen Innenkonusabschnitt (16) aufweist, der mit Selbsthemmung auf einem Außenkonusabschnitt (11) des vorderen Endes des Hohlschafts (3) befestigt werden kann.

5. Dämmstoffhalter nach Anspruch 4,
**dadurch gekennzeichnet,**
**dass** Schneidring (7a) und Innenkonusabschnitt (16) axial voneinander beabstandet und durch Längsstreben (17a; 17b) miteinander verbunden sind.

6. Dämmstoffhalter nach einem der Ansprüche 2 bis 5,
**dadurch gekennzeichnet,**
**dass** der Schneidring (7a) mit einer einheitlichen umlaufenden Schneidkante (15) oder umlaufend mit einer sägezahnförmigen Schneidkante (15) ausgebildet ist.

7. Dämmstoffhalter nach Anspruch 1,
**dadurch gekennzeichnet,**
**dass** das Führungs- und Zentriermittel (7) als längliche Hülse (7b) ausgebildet ist.

8. Dämmstoffhalter nach einem oder mehreren der Ansprüche 2 bis 6 und nach Anspruch 7,
**dadurch gekennzeichnet,**
**dass** die längliche Hülse (7b) konzentrisch im Schneidring (7a) und aus diesem vorkragend angeordnet ist.

9. Dämmstoffhalter nach Anspruch 8,
**dadurch gekennzeichnet,**
**dass** die längliche Hülse (7b) an ihrem vorderen Ende in einen Hohlzapfen (23) übergeht, dessen Außendurchmesser kleiner als der des vorgebohrten Lochs (20) ist.

10. Dämmstoffhalter nach Anspruch 8,
**dadurch gekennzeichnet,**
**dass** die Hülse (7b) mit einer Knautschzone (18) ausgebildet ist.

## Claims

1. An insulation holder (1), which has a central hollow shank (3), provided with a stepped longitudinal hole (2) for guiding through a screw (13), for fastening insulating boards (8) or similar insulating material to a substrate (10), wherein the rear shank end in the mounting direction (4) is constructed for the rotationally-fixed placement of a mounting tool with a rotationally driving polygonal socket wrench (5) and the hollow shank (3) is provided with at least one screw-surface-like circumferential cutting helix (6; 6a, 6b), and wherein after drilling through the insulating board (8) up to and including into the substrate (10), the front end of the insulation holder (1), premounted with the screw (13), in the mounting direction (4) thereof is placed onto the hole inlet opening of the insulating board (8) for rotational driving into the pilot-drilled hole (20),
**characterized**
**in that** the insulation holder is constructed with at least one guiding and centring means (7; 7a, 7b), which leads in the mounting direction (4) with respect to the hollow shank (3), is annular, cuts into the insulating material, and has a larger external diameter (D1, D2) than the pilot-drilled hole (20) and an internal diameter (d1) at least corresponding to the nominal thread diameter (d2) of the screw (13), wherein the insulation holder (1) for mounting, premounted with the screw (13) and with the guiding and centring means (7; 7a, 7b) is already placed during the placement of the insulation holder (1) onto the insulating board (8) and concentrically encloses the inlet opening of the pilot-drilled hole (20).

2. The insulation holder according to Claim 1,
**characterized**
**in that** the guiding and centring means (7) is constructed as a thin-walled cutting ring (7a), which has an external diameter (D1) matching the largest external diameter (D) of the hollow shank (3).

3. The insulation holder according to Claim 2,
**characterized**
**in that** the cutting ring (7a) is constructed in one piece with the hollow shank (3).

4. The insulation holder according to Claim 2,
**characterized**
**in that** the cutting ring (7a) has an internal cone section (16) at its rear end in the mounting direction (4), which can be fastened with self-locking on an external cone section (11) of the front end of the hollow shank (3).

5. The insulation holder according to Claim 4,
**characterized**
**in that** cutting ring (7a) and internal cone section (16) are axially spaced from one another and connected to one another by means of longitudinal braces (17a; 17b) .

6. The insulation holder according to one of Claims 2 to 5,
**characterized**
**in that** the cutting ring (7a) is constructed with a uniform circumferential cutting edge (15) or circumferentially with a sawtooth-shaped cutting edge (15) .

7. The insulation holder according to Claim 1,
**characterized**
**in that** the guiding and centring means (7) is constructed as a longitudinal sleeve (7b).

8. The insulation holder according to one or more Claims 2 to 6 and according to Claim 7,
**characterized**
**in that** the longitudinal sleeve (7b) is arranged concentrically in the cutting ring (7a) and projecting from the same.

9. The insulation holder according to Claim 8,
**characterized**
**in that** the longitudinal sleeve (7b) transforms into a hollow pin (23) at its front end, the external diameter of which is smaller than that of the pilot-drilled hole (20) .

10. The insulation holder according to Claim 8,
**characterized**
**in that** the sleeve (7b) is constructed with a crumple zone (18).

## Revendications

1. Support d'agent isolant (1), qui pour la fixation de panneaux isolants (8) ou de moyens isolants similaires sur un support (10) comporte une tige creuse (3) centrale, munie d'un perçage longitudinal échelonné (2), destiné à faire passer une vis (13), pour la mise en prise solidaire en rotation d'un outil de montage, l'extrémité arrière de la tige dans la direction de montage (4) étant conçue avec un polygone creux d'entraînement en rotation (5) et la tige creuse (3) étant munie d'au moins une vis tranchante (6 ; 6a, 6b) à surface de type hélicoïdal, et après le perçage du panneau isolant (8) jusque dans le support (10) inclus, pour l'enfoncement en rotation dans le trou (20) pré-percé, le support d'agent isolant (1) préalablement monté avec la vis (13) étant mis en prise par son extrémité avant, dans la direction de montage (4) sur l'orifice d'entrée du trou du panneau isolant (8),
**caractérisé en ce qu'**il
est conçu avec un moyen de guidage et de centrage (7 ; 7a, 7b) précédant la tige creuse (3) dans la direction de montage (4), en forme de bague, s'entaillant dans l'agent isolant, présentant un diamètre extérieur (D1, D2) supérieur à celui du trou (20) pré-percé et un diamètre intérieur (d1) correspondant au moins au diamètre nominal du filetage (d2) de la vis (13), le support d'agent isolant (1) prémonté avec la vis (13) pour le montage se posant par le moyen de guidage et de centrage (7 ; 7a, 7b) sur le panneau isolant (8) dès la mise en prise du support d'agent isolant (1) et entourant de manière concentrique l'orifice d'entrée du trou (20) pré-percé.

2. Support d'agent isolant selon la revendication 1,
**caractérisé en ce que**
le moyen de guidage et de centrage (7) est conçu sous la forme d'une bague coupante (7a) à paroi mince, qui détient un diamètre extérieur (D1) coïncidant avec le plus grand diamètre extérieur (D) de la tige creuse (3) .

3. Support d'agent isolant selon la revendication 2,
**caractérisé en ce que**
la bague coupante (7a) est conçue en monobloc avec la tige creuse (3).

4. Support d'agent isolant selon la revendication 2,
**caractérisé en ce que**
sur son extrémité arrière dans la direction de montage (4), la bague coupante (7a) comporte un tronçon conique interne (16) susceptible d'être fixé par arc-boutement sur un tronçon conique externe (11) de l'extrémité avant de la tige creuse (3).

5. Support d'agent isolant selon la revendication 4,
**caractérisé en ce que**
la bague coupante (7a) et le tronçon conique interne (16) sont écartés l'un de l'autre en direction axiale et sont reliés l'un à l'autre par des longerons (17a ; 17b) .

6. Support d'agent isolant selon l'une quelconque des revendications 2 à 5,
**caractérisé en ce que**
la bague coupante (7a) est conçue avec un tranchant (15) à pourtour régulier ou avec un pourtour doté d'un tranchant (15) en dents de scie.

7. Support d'agent isolant selon la revendication 1,
**caractérisé en ce que**
le moyen de guidage et de centrage (7) est conçu sous la forme d'une douille (7b) allongée.

8. Support d'agent isolant selon l'une quelconque ou plusieurs des revendications 2 à 6 et selon la revendication 7,
**caractérisé en ce que**
la douille (7b) allongée est placée de manière concentrique dans la bague coupante (7a) et de manière à déborder de cette dernière.

9. Support d'agent isolant selon la revendication 8,
**caractérisé en ce que**
sur son extrémité avant, la douille (7b) allongée passe dans un tenon creux (23), dont le diamètre extérieur est inférieur à celui du trou (20) pré-percé.

10. Support d'agent isolant selon la revendication 8,
**caractérisé en ce que**
la douille (7b) est conçue avec une zone déformable (18) .
